# FASCICULE DE BREVET EUROPEEN

(11) **EP 3 119 620 B1**
(45) Date de publication et mention de la délivrance du brevet: **09.09.2020**
(21) Numéro de dépôt: 15709528.2
(22) Date de dépôt: 09.02.2015
(51) Int. Cl.: B60D 1/06, B60R 9/06

(54) **SYSTÈME D'ACCOUPLEMENT D'UNE GAMME DE PORTE-CHARGE AVEC UN CROCHET A ROTULE FIXÉ A LA STRUCTURE ARRIÈRE D'UN VÉHICULE AUTOMOBILE**
SYSTEM ZUR KOPPLUNG EINER REIHE VON TRÄGERN MIT EINEM AN DER HECKSTRUKTUR EINES KRAFTFAHRZEUGS BEFESTIGTEN WIRBELHAKEN
SYSTEM FOR COUPLING A RANGE OF CARRIERS WITH A SWIVEL HOOK FIXED TO THE REAR STRUCTURE OF A MOTOR VEHICLE

(30) Priorité: 21.03.2014 FR 1452386
(43) Date de publication de la demande: 25.01.2017
(73) Titulaire: Renault S.A.S., 92100 Boulogne-Billancourt (FR)
(72) Inventeur: CHARBONNIERAS, Bruno, F-78950 Gambais (FR); MIGEREL, Willy, F-92100 Boulogne (FR)
(86) Numéro de dépôt international: PCT/FR2015/050298
(87) Numéro de publication internationale: WO 2015/140426

(56) Documents cités:
- EP-A1- 2 258 567
- DE-A1-102005 040 182
- GB-A- 525 354
- US-A- 3 694 006

## Description

### Domaine de l'invention :

La présente invention concerne la fixation d'une gamme de porte-charge, et plus précisément de porte-vélos sur la partie arrière d'un véhicule automobile. Dans la suite de la description on évoque le terme « porte-vélo » comme expression type et parfaitement adaptée au contexte de l'invention, étant entendu que le concept de l'invention s'étend plus généralement à tout porte-charge utilisant les mêmes moyens d'accouplement que ceux décrits ci-après dans le cadre de l'invention.

### Etat de la technique :

La fixation d'un porte-vélo sur la partie arrière d'un véhicule automobile s'effectue classiquement d'une première façon sur le volet ou hayon arrière du véhicule à l'aide d'éléments structurels du porte-vélo et de sangles de maintien ou d'une seconde façon qui nous intéresse plus particulièrement ici sur un crochet d'attelage à rotule fixé rigidement à la structure arrière du véhicule, sur lequel on vient accoupler et verrouiller un plateau de support des vélos.
Ces moyens d'attelage qui sont adaptés à la traction d'une remorque ou caravane sont dimensionnés et reliés à la structure du véhicule par des moyens robustes adaptés à la traction de lourdes charges. Il est regrettable de devoir équiper le véhicule d'un tel ensemble d'attelage complet, adapté à la traction d'une remorque ou caravane, lorsque le seul besoin de l'utilisateur se limite au transport de vélo sur le véhicule, qui implique des efforts plus limités et suivant des axes différents. Le document EP 2 258 567 A1 divulgue un système d'accouplement selon le préambule de la revendication 1.

### But de l'invention :

L'invention a pour but de pallier tout ou partie des inconvénients précédents en proposant un système d'accouplement d'une gamme de porte-charge à l'arrière du véhicule, compatible avec un crochet à rotule fixé à la structure du véhicule, cette gamme comprenant au moins deux types différents de porte-vélos pourvus d'organes de fixation différents, tout en garantissant que le système d'accouplement interdise d'atteler une remorque ou une caravane dans la mesure où le système n'est pas adapté à de telles charges et contraintes mais est dimensionné au juste nécessaire pour le transport d'un ou plusieurs vélos à l'arrière du véhicule.

### Objet de l'invention :

A cet effet, l'invention a pour objet un système d'accouplement d'une gamme de porte-charge avec un crochet à rotule fixé à la structure arrière d'un véhicule automobile, le crochet comprenant une boule à l'extrémité libre d'un col sensiblement vertical, caractérisé en ce que le crochet est adapté pour coopérer sélectivement avec :
- un organe de fixation d'un porte-charge d'un premier type, comprenant un capot délimitant un logement de réception de la boule, la boule étant calée transversalement entre des parois latérales du capot tandis que des moyens de verrouillage débrayables sont prévus pour bloquer la boule longitudinalement dans le logement de réception, un premier espace étant ménagé verticalement entre le sommet de la boule et une paroi de fond du logement de réception,
- un organe de fixation d'un porte-charge d'un second type, comprenant deux parties cylindriques articulées pour former une pince apte à être refermée de manière amovible sur des zones latérales de la boule et du col, un second espace étant ménagé transversalement entre les parties cylindriques,
le crochet étant pourvu d'un doigt de détrompage fixé rigidement à la boule, le doigt s'élevant au-dessus de la boule sur une hauteur comprise entre 10 mm et la hauteur du premier espace et étant pourvu d'une base dont la largeur suivant la direction transversale est inférieure à la largeur du second espace.

Ainsi le véhicule peut recevoir des porte-charge ou porte-vélo sur un crochet à rotule qui est spécifiquement conçu et dimensionné à cet effet, au juste nécessaire, et qui n'est pas destiné à recevoir des remorques ou caravanes. Le terme « rotule » fait référence à la liaison réalisée entre la boule et l'organe de fixation, qui s'apparente à une liaison rotule, bien que certains degrés de liberté soit supprimés pour le maintien adéquat du porte-charge ou porte-vélo à l'arrière du véhicule. Ce crochet à rotule selon l'invention est qualifié de «crochet à rotule restrictive» en raison de l'impossibilité d'accrocher une remorque ou caravane classique dont l'organe d'attelage est classiquement «à tête de lapin». Cette restriction limite l'utilisation de la boule en ne permettant l'accrochage que d'un porte-charge ou porte-vélo selon les préconisations du constructeur automobile. Le système d'accouplement est judicieusement adapté à une gamme d'au moins deux types différents d'organes de fixation, ce qui assure une grande polyvalence du système.
Le système d'accouplement interdit la fixation d'une remorque ou caravane pour ne pas risquer un endommagement, une casse ou une utilisation inappropriée du véhicule sur lequel est fixé le système.

Selon d'autres caractéristiques avantageuses de l'invention, la boule a un diamètre sensiblement égal à 50 mm, tandis que la distance entre le centre de la boule et le sommet du doigt est comprise entre 40 et 50 mm, et est notamment sensiblement égale à 45 mm.
Selon encore d'autres caractéristiques avantageuses de l'invention, le doigt a une base dont la largeur mesurée suivant la direction longitudinale est comprise entre 10 et 20 mm, notamment une largeur sensiblement égale à 14 mm.
Selon encore d'autres caractéristiques avantageuses de l'invention, le doigt a une base dont la largeur mesurée suivant la direction transversale est comprise entre 5 et 10 mm, notamment une largeur sensiblement égale à 7 mm.
Selon d'autres caractéristiques avantageuses de l'invention, le doigt a une forme d'extrémité arrondie dont le rayon est compris entre 5 et 10 mm, en particulier un rayon sensiblement égal à 6 mm.
Selon d'autres caractéristiques avantageuses de l'invention, le crochet à rotule restrictive est fixé à une région centrale d'une poutre s'étendant suivant la direction transversale du véhicule, la poutre étant reliée à la structure arrière du véhicule par des éléments de fixation localisés à chacun des extrémités de la poutre.

L'invention a également pour objet un ensemble véhicule - porte-charge, caractérisé en ce qu'il comprend un système d'accouplement ayant tout ou partie des caractéristiques précédentes.

Selon d'autres caractéristiques essentielles de l'invention, le porte-charge est un porte-vélo.

### Exposé de l'invention :

L'invention sera mieux comprise à la lecture de la description suivante d'un exemple non limitatif de l'invention, et à la lumière des dessins annexés sur lesquels :
- la figure 1 représente une vue en perspective de la partie arrière d'un véhicule automobile, sur laquelle est montée une poutre transversale portant un crochet de fixation à rotule restrictive,
- la figure 2 représente une section dans un plan XZ d'un système d'attelage pourvu d'un crochet à rotule classique de l'art antérieur, sur lequel est attelé un organe de fixation classique d'une remorque ou d'une caravane..., et
- la figure 3 est une section dans un plan XZ d'un système d'attelage pourvu d'un crochet à rotule classique de l'art antérieur, sur lequel est fixé un organe de fixation d'un premier type, permettant la fixation d'un premier type de porte-vélo,
- la figure 4 est une vue suivant la direction longitudinale X d'un système d'attelage pourvu d'un crochet à rotule classique de l'art antérieur, sur lequel est fixé un organe de fixation d'un second type, permettant la fixation d'un second type de porte-vélo,
- la figure 5 est une vue en perspective de la partie inférieure du second type de porte-vélo de la figure 4, illustrant l'organe de fixation associé,
- la figure 6 est une section dans un plan XZ illustrant un système d'accouplement selon l'invention, comprenant un crochet à rotule restrictive selon l'invention et représentant un organe de fixation d'un premier type correspondant à un premier type de porte-vélo,
- la figure 7 est une vue suivant la direction longitudinale X illustrant un système d'accouplement comprenant un crochet à rotule restrictive selon l'invention, représentant un organe de fixation d'un second type correspondant à un second type de porte-vélo,
- la figure 8 est une vue d'un détail du système d'accouplement de l'invention illustrant la forme de la boule et du doigt de détrompage suivant une vue selon la direction longitudinale X, et
- la figure 9 représente un montage impossible d'un organe de fixation classique d'une remorque ou d'une caravane sur un crochet à rotule restrictive suivant l'invention, le doigt de détrompage étant en conflit avec la forme de l'organe de fixation.

Pour les besoins de la description, les directions et orientations sont indiquées en référence au repère XYZ classiquement utilisé en conception automobile, dans lequel X est la direction longitudinale avant-arrière du véhicule, dirigé vers l'arrière, Y est la direction transversale au véhicule, dirigé vers la droite et Z la direction verticale dirigée vers le haut.
Les notions avant-arrière s'entendent par rapport au sens de marche normal du véhicule qui est dirigé vers l'avant.
Le terme « sensiblement » indique qu'un léger écart est admis par rapport à une position ou disposition nominale déterminée, tout en restant inclus dans le cadre de l'invention. Par exemple «sensiblement vertical» indique qu'un écart de l'ordre de 3° par rapport à une orientation strictement verticale est admis dans le cadre de l'invention.

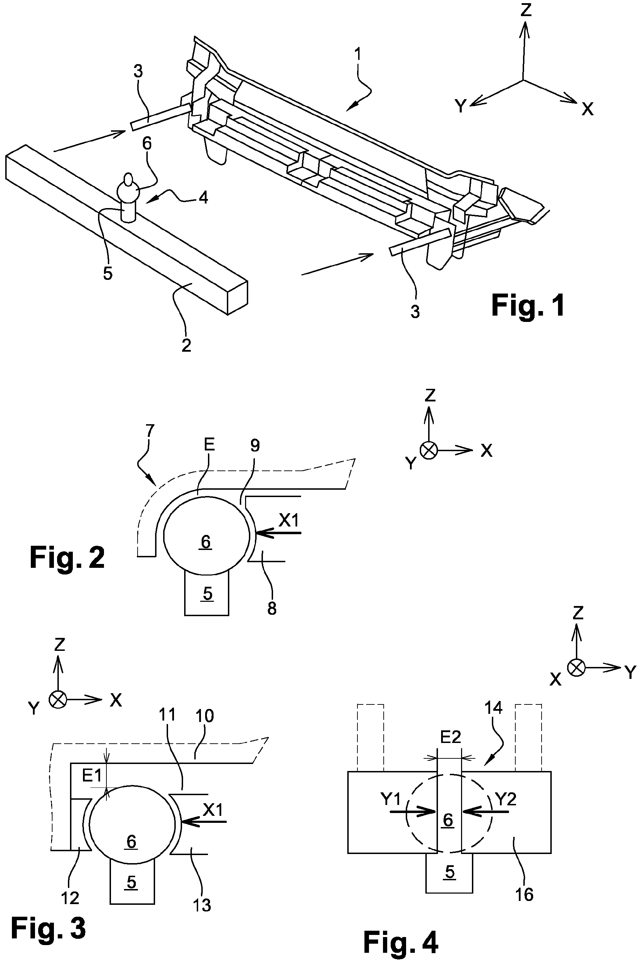

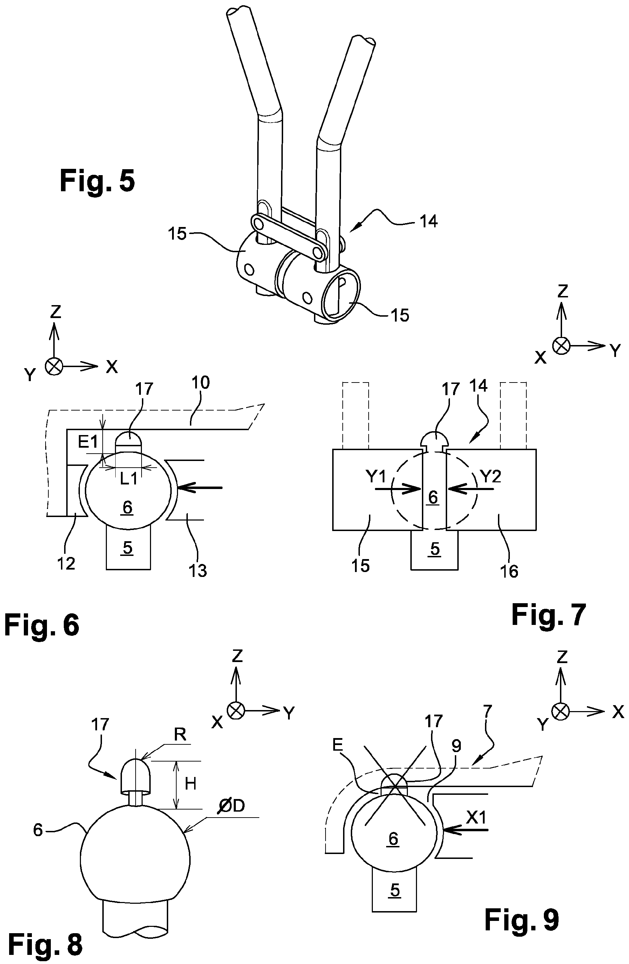

On a représenté à la figure 1 une partie arrière 1 de la structure d'un véhicule automobile sur laquelle est fixée une poutre 2 s'étendant suivant la direction transversale Y du véhicule. La poutre 2 est reliée à chacune de ses extrémités à des pièces d'interfaces rigidement fixées à la structure du véhicule et situées sur les côtés de ce dernier. La poutre 2 est reliée à ces pièces, par l'intermédiaire d'axes support 3 s'étendant suivant la direction longitudinale X du véhicule. La poutre 2 est pourvue en son milieu d'un crochet de fixation 4 dit «à rotule restrictive» qui comprend un col 5 solidaire et indémontable de la poutre 2. Le col remonte à l'arrière verticalement jusqu'à une boule 6 de fixation destinée à recevoir le porte-vélo (non représenté).
Pour une bonne compréhension de l'invention on a représenté aux figures 2 à 5 des dispositifs de l'art antérieur vis-à-vis desquels l'invention est définie par adaptation et différence. On notera que la poutre 2 et ses moyens de fixation à la structure du véhicule tels qu'illustrés à la figure 1 sont spécifiques à l'invention, et que les systèmes connus diffèrent en ce qui concerne la fixation du crochet à la structure du véhicule. Néanmoins les crochets d'attelage connus à rotule ont une forme très semblable dans la partie permettant l'attelage proprement dit. En référence à la figure 2, la boule 6 de fixation est destinée à être insérée et verrouillée avec un organe de fixation 7 classique d'une remorque ou caravane. Cet organe de fixation 7 étant appelé « à tête de lapin » en raison de la forme du levier de verrouillage manuel (non représenté) qui évoque des oreilles de lapin, ce levier étant monté à rotation au-dessus de l'organe de fixation et tant destiné à actionner un verrou 8 qui se déplace longitudinalement (suivant X1) pour emprisonner la boule 6 dans un logement fermé 9 de l'organe de fixation 7 et ainsi la retenir attachée à l'organe de fixation 7. Dans un tel système de l'art antérieur, l'espace (considéré suivant Z) entre le sommet de la boule 6 et le fond du logement 9 située au-dessus de la boule est très réduit voire nul, la boule 6 et le fond du logement 9 étant susceptibles d'être directement en contact.
En référence à la figure 3, la même boule d'attelage 6 peut recevoir un organe de fixation 10 d'un premier type connu de porte-vélo. Cet organe de fixation correspond typiquement à des portes-vélo tels que commercialisés par la société Thule ® sous les références « Euroride » ® (modèles deux ou trois vélos), «Euroway G2» ®, «Ride-On» ® (modèles deux ou trois vélos) et «Easybase 948» ®. Ces porte-vélo comportent des organes de verrouillage proches dans le principe de celui décrit précédemment pour une remorque ou une caravane hormis le fait qu'un espace E1 est ménagé verticalement entre le sommet de la boule 6 et le fond du logement 11 dans lequel la boule 6 est retenue, une fois que celle-ci est verrouillée en place par des moyens de verrouillage 12, 13 prenant la boule 6 en sandwich suivant la direction longitudinale X. L'un 13 des moyens de verrouillage est déplacé suivant la flèche X1 pour bloquer la boule 6 contre l'autre 12 moyen de verrouillage de façon à emprisonner celle-ci dans le logement 11 et la retenir attachée avec l'organe de verrouillage. On note qu'un déplacement manuel de l'organe de verrouillage 13 est ici réalisé à l'aide d'une molette (non représentée) remplaçant le levier de l'organe de fixation 8 de la figure 2. Le porte-vélo est en outre bloqué en rotation autour de l'axe transversal Y par des moyens d'appui (non représentés) prévus entre les organes de verrouillage 12 et 13 et le col 5.
En référence à la figure 4, la même boule d'attelage 6 peut recevoir un organe de fixation 14 d'un second type connu de porte-vélo. Cet organe de fixation 14 correspond typiquement à des portes-vélo tels que commercialisés par la société Thule ® sous les références «Xpress 970» ® et «Hang-On» ® (modèles deux, trois ou quatre vélos). Un tel porte-vélo comprend deux parties cylindriques 15, 16 dont l'axe longitudinal s'étend suivant la direction transversale Y du véhicule. Ces parties cylindriques 15, 16 sont articulées entre elles via un système à biellettes (figure 5) pour former une pince apte à être refermée suivant les flèches Y1 et Y2 de manière amovible sur des zones latérales de la boule 6 et du col 5. Les bords des deux parties cylindriques qui se font face comportent chacun une zone inférieure ayant un profil concave conformé pour épouser la forme extérieure cylindrique du col 5 lorsque la pince est refermée sur la boule 5. Cet agencement a pour but d'empêcher la rotation autour de l'axe transversal Y du porte-vélo monté sur la boule 6. Un espace E2 est ménagé suivant la direction Y entre les bords adjacents des deux parties cylindriques 15, 16 lorsque la pince formée de ces deux parties cylindriques 15, 16 est refermée autour de la boule 6.
L'invention met très astucieusement à profit les formes respectives des organes de fixation des deux types précités, afin de pouvoir adapter une gamme d'aux moins deux types différents de porte-vélo, sur un même crochet d'attelage, tout en garantissant qu'aucun organe de fixation spécifique à une remorque ou une caravane ne puisse être attelé au crochet. Ce crochet d'attelage est fixé à la structure du véhicule comme déjà indiqué en référence à la figure 1.
Selon un aspect essentiel de l'invention, le crochet pourvu d'un col 5 et d'une boule 6 de fixation est pourvu d'un doigt de détrompage 17 fixé rigidement à la boule 6 et s'élevant au-dessus de celle-ci. Le doigt 17 a une hauteur H (mesurée suivant Z) adaptée pour pénétrer dans le premier espace E1 lorsqu'un porte-vélo du premier type est installé sur le crochet et a une base dont la largeur L (mesurée suivant Y) est adaptée pour traverser le second espace E2 lorsqu'un porte-vélo du second type est installé sur le crochet. On note que les organes de fixation illustrés sur les figures 6 et 7 sont strictement les mêmes que ceux illustrés aux figures 3 et 4 respectivement.

En référence à la figure 8, la boule 6 a un diamètre D sensiblement égal à 50 mm. La distance entre le centre de la boule 6 et le sommet du doigt 17 est comprise entre 40 et 50 mm. Cette distance est typiquement de 45 mm.
Le doigt 6 a une base dont la largeur L1 mesurée suivant la direction longitudinale X du véhicule est comprise entre 10 et 20 mm (figure 6). Cette largeur L1 est typiquement égale à 14 mm. Par ailleurs la base du doigt 17 a une largeur L2 considérée suivant la direction transversale Y qui est comprise entre 5 et 10 mm (figure 7). Cette largeur L2 est typiquement égale à 7 mm.
Le doigt 17 a une forme d'extrémité arrondie dont le rayon R est compris entre 5 et 10 mm. Ce rayon est typiquement de 6 mm.
En référence à la figure 9, qui illustre un organe de fixation 7 conventionnel d'une remorque ou caravane, on observe que la hauteur H du doigt de détrompage est supérieure à la hauteur de l'espace E disponible (mesuré suivant Z) entre le sommet de la boule 6 et le fond du logement 9. De ce fait il est impossible de refermer les moyens de verrouillage sur la boule 6 pour l'emprisonner dans le logement. La fixation de cet organe de fixation 7 est impossible sur la boule 6 pourvue du doigt de détrompage. Seuls les porte-vélos décrits précédemment peuvent être fixés au crochet d'attelage pourvu de ce doigt, ce qui garantit une utilisation conforme aux prescriptions techniques.

Bien entendu, l'invention n'est pas limitée aux modes ou variantes de réalisation décrits précédemment et comprends tous les équivalents techniques de ces moyens.

## Revendications

1. Système d'accouplement d'une gamme de porte-charge avec un crochet à rotule fixé à la structure arrière (1) d'un véhicule automobile, le crochet comprenant une boule (6) à l'extrémité libre d'un col (5) sensiblement vertical, le crochet étant adapté pour coopérer sélectivement avec :
- un organe de fixation (10) d'un porte-charge d'un premier type, comprenant un capot délimitant un logement de réception (11) de la boule (6), la boule (6) étant calée transversalement entre des parois latérales du capot tandis que des moyens de verrouillage débrayables (12, 13) sont prévus pour bloquer la boule (6) longitudinalement dans le logement de réception (9), un premier espace (E1) étant ménagé verticalement entre le sommet de la boule (6) et une paroi de fond du logement de réception (11),
- un organe de fixation d'un porte-charge d'un second type (14), comprenant deux parties cylindriques (15, 16) articulées pour former une pince apte à être refermée de manière amovible sur des zones latérales de la boule (6) et du col (5), un second espace (E2) étant ménagé transversalement entre les parties cylindriques (15, 16),
le crochet étant pourvu d'un doigt de détrompage (17) fixé rigidement à la boule (6), le doigt (17) s'élevant au-dessus de la boule (6) sur une hauteur (H) comprise entre 10 mm et la hauteur du premier espace (E1) et étant pourvu d'une base dont la largeur (L2) suivant la direction transversale (Y) est inférieure à la largeur du second espace (E2),
**caractérisé en ce que** le doigt (17) a une forme d'extrémité arrondie dont le rayon (R) est sensiblement égal à 6 mm. le doigt (17) ayant une base dont la largeur (L2) mesurée suivant la direction transversale (Y) est comprise entre 5 et 10 mm, notamment une largeur (L2) sensiblement égale à 7 mm

2. Système d'accouplement selon la revendication 1, **caractérisé en ce que** la boule (6) a un diamètre sensiblement égal à 50 mm, tandis que la distance entre le centre de la boule (6) et le sommet du doigt (17) est comprise entre 40 et 50 mm, et est notamment sensiblement égale à 45 mm.

3. Système d'accouplement selon la revendication 1 ou 2, **caractérisé en ce que** le doigt (17) a une base dont la largeur (L1) mesurée suivant la direction longitudinale (X) est comprise entre 10 et 20 mm, notamment une largeur (L1) sensiblement égale à 14 mm.

4. Système d'accouplement selon l'une quelconque des revendications précédentes, **caractérisé en ce que** le crochet à rotule est fixé à une région centrale d'une poutre (2) s'étendant suivant la direction transversale (Y) du véhicule, la poutre (2) étant reliée à la structure arrière du véhicule par des éléments de fixation localisés à chacun des extrémités de la poutre (2).

5. Ensemble constitué d'un véhicule - porte-charge, **caractérisé en ce qu'**il comprend un système d'accouplement selon l'une quelconque des revendications précédentes.

6. Ensemble selon la revendication 5, **caractérisé en ce que** le porte-charge est un porte-vélo.

## Patentansprüche

1. System zum Koppeln einer Reihe von Lastträgern mit einem Kugelgelenkhaken, der an der Heckstruktur (1) eines Kraftfahrzeugs befestigt ist, wobei der Haken eine Kugel (6) am freien Ende eines im Wesentlichen vertikalen Halses (5) aufweist, wobei der Haken ausgebildet ist, um selektiv zusammenzuarbeitet mit:
- einem Befestigungselement (10) eines Lastträgers eines ersten Typs, das eine Abdeckung aufweist, die ein Aufnahmegehäuse (11) der Kugel (6) abgrenzt, wobei die Kugel (6) quer zwischen den Seitenwänden der Abdeckung eingeklemmt ist, während ausrückbare Verriegelungsmittel (12, 13) vorgesehen sind, um die Kugel (6) in Längsrichtung in dem Aufnahmegehäuse (9) zu verriegeln, wobei ein erster Raum (E1) vertikal zwischen dem Scheitel der Kugel (6) und einer Bodenwand des Aufnahmegehäuses (11) erzeugt wird,
- einem Befestigungselement eines Lastträgers eines zweiten Typs (14), das zwei zylindrische Teile (15, 16) aufweist, die so ineinandergefügt sind, dass sie eine Klammer bilden, die geeignet ist, an den seitlichen Zonen der Kugel (6) und des Halses (5) entfernbar geschlossen zu werden, wobei ein zweiter Raum (E2) quer zwischen den zylindrischen Teilen (15, 16) erzeugt wird,
wobei der Haken mit einem Polarisationsfinger (17) versehen ist, der starr an der Kugel (6) befestigt ist, wobei der Finger (17) sich über der Kugel (6) in einer Höhe (H) zwischen 10 mm und der Höhe des ersten Raums (E1) erstreckt und mit einer Basis versehen ist, deren Breite (L2) in Querrichtung (Y) geringer ist als die Breite des zweiten Raums (E2),
**dadurch gekennzeichnet, dass** der Finger (17) eine abgerundete Endform aufweist, deren Radius (R) im Wesentlichen gleich 6 mm ist, wobei der Finger (17) eine Basis aufweist, deren in Querrichtung (Y) gemessene Breite (L2) zwischen 5 und 10 mm liegt, insbesondere eine Breite (L2), die im Wesentlichen gleich 7 mm ist.

2. System zum Koppeln nach Anspruch 1, **dadurch gekennzeichnet, dass** die Kugel (6) einen Durchmesser von im Wesentlichen gleich 50 mm aufweist, während der Abstand zwischen der Mitte der Kugel (6) und dem Scheitel des Fingers (17) zwischen 40 und 50 mm liegt und im Wesentlichen gleich 45 mm ist.

3. System zum Koppeln nach Anspruch 1 oder 2, **dadurch gekennzeichnet, dass** der Finger (17) eine Basis aufweist, deren in Längsrichtung (X) gemessene Breite (L1) zwischen 10 und 20 mm liegt, insbesondere eine Breite (L1), die im Wesentlichen gleich 14 mm ist.

4. System zum Koppeln nach einem der vorhergehenden Ansprüche, **dadurch gekennzeichnet, dass** der Kugelgelenkhaken in einem mittleren Bereich eines Trägers (2) befestigt ist, der sich in Querrichtung (Y) des Fahrzeugs erstreckt, wobei der Träger (2) über Befestigungselemente mit der Heckstruktur verbunden ist, die an jedem Ende des Trägers (2) angeordnet sind.

5. Baugruppe, die aus einem Fahrzeug-Lastträger besteht, **dadurch gekennzeichnet, dass** sie ein System zum Koppeln nach einem der vorhergehenden Ansprüche aufweist.

6. Baugruppe nach Anspruch 5, **dadurch gekennzeichnet, dass** der Lastträger ein Fahrradträger ist.

## Claims

1. System for coupling a range of load carriers with a ball-jointed hook fastened to the rear structure (1) of a motor vehicle, the hook comprising a ball (6) at the free end of an essentially vertical neck (5), the hook being designed to selectively cooperate with:
- a fastening member (10) of a load carrier of a first type, comprising a cover delimiting a recess (11) for receiving the ball (6), the ball (6) being wedged transversely between lateral walls of the cover while disengaged double locking means (12, 13) are provided for immobilizing the ball (6) longitudinally in the receiving recess (9), a first space (E1) being created vertically between the summit of the ball (6) and an end wall of the receiving recess (11),
- a fastening member of a load carrier of a second type (14), comprising two cylindrical portions (15, 16) that are articulated so as to form a gripper that can be removably closed on lateral regions of the ball (6) and of the neck (5), a second space (E2) being created transversely between the cylindrical portions (15, 16),
the hook being provided with a poka-yoke finger (17) rigidly fastened to the ball (6), the finger (17) rising above the ball (6) by a height (H) between 10 mm and the height of the first space (E1) and being provided with a base whose width (L2) in the transverse direction (Y) is smaller than the width of the second space (E2),
**characterized in that** the finger (17) has a rounded end shape whose radius (R) is essentially equal to 6 mm, the finger (17) having a base whose width (L2) measured in the transverse direction (Y) is between 5 and 10 mm, in particular a width (L2) essentially equal to 7 mm.

2. Coupling system according to Claim 1, **characterized in that** the ball (6) has a diameter essentially equal to 50 mm, while the distance between the centre of the ball (6) and the summit of the finger (17) is between 40 and 50 mm, and is in particular essentially equal to 45 mm.

3. Coupling system according to Claim 1 or 2, **characterized in that** the finger (17) has a base whose width (L1) measured in the longitudinal direction (X) is between 10 and 20 mm, in particular a width (L1) essentially equal to 14 mm.

4. Coupling system according to any one of the preceding claims, **characterized in that** the ball-jointed hook is fastened to a central region of a beam (2) extending in the transverse direction (Y) of the vehicle, the beam (2) being connected to the rear structure of the vehicle by fastening elements located at each end of the beam (2).

5. Assembly consisting of a load carrier - vehicle, **characterized in that** it comprises a coupling system according to any one of the preceding claims.

6. Assembly according to Claim 5, **characterized in that** the load carrier is a bicycle carrier.
